Europäisches Patentamt

(19) **European Patent Office**

Office européen des brevets

(11) Numéro de publication: **0 042 335
B1**

(12) **FASCICULE DE BREVET EUROPEEN**

(45) Date de publication du fascicule du brevet:
24.10.84

(51) Int. Cl.³: **F 02 B 37/00**

(21) Numéro de dépôt: **81400935.3**

(22) Date de dépôt: **12.06.81**

(54) **Perfectionnements aux moteurs à combustion interne suralimentés, notamment aux moteurs diesel, et aux procédés de mise en marche de ces moteurs et de réglage de leur vitesse.**

(30) Priorité: **17.06.80 FR 8013402**

(43) Date de publication de la demande:
**23.12.81 Bulletin 81/51**

(45) Mention de la délivrance du brevet:
**24.10.84 Bulletin 84/43**

(84) Etats contractants désignés:
**BE GB IT NL SE**

(56) Documents cités:
**EP - A - 0 031 770
DE - A - 2 212 960
FR - A - 2 322 266
GB - A - 576 241
GB - A - 2 005 765
US - A - 4 026 115**

(73) Titulaire: **ETAT-FRANCAIS représenté par le DELEGUE GENERAL POUR L'ARMEMENT, Bureau des Brevets et Inventions de la Délégation Générale pour l'Armement 14, rue Saint-Dominique, F-75997 Paris Armées (FR)**

(72) Inventeur: **Melchior, Jean, 66 boulevard Maurice Barrès, F-92200 Neuilly-sur-Seine (FR)**
Inventeur: **Andre, Thierry, 126 boulevard Saint-Germain, F-75006 Paris (FR)**

(74) Mandataire: **Lemoine, Michel et al, Cabinet Michel Lemoine 13 Boulevard des Batignolles, F-75008 Paris (FR)**

Il est rappelé que: Dans un délai de neuf mois à compter de la date de publication de la mention de la délivrance du brevet européen toute personne peut faire opposition au brevet européen délivré. auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention est relative aux moteurs à combustion interne suralimentés, notamment aux moteurs Diesel suralimentés et plus particulièrement encore parmi ceux-ci aux moteurs à quatre temps et à taux de compression relativement bas, comprenant, d'une part, au moins deux compresseurs, dont les sorties sont susceptibles d'être reliées en parallèle, par un passage de liaison commun, à l'admission d'air du moteur, ainsi que des turbines, dont chacune entraîne mécaniquement l'un des compresseurs en formant avec lui un groupe turbocompresseur et dont les entrées sont susceptibles d'être reliées en parallèle, par un passage de transfert commun, à l'échappement du moteur et, d'autre part, des moyens qui sont sensibles à un paramètre de fonctionnement du moteur, représentatif du rapport entre le débit d'air traversant le moteur et le débit d'air total délivré par les compresseurs, et qui sont agencés pour interrompre ou assurer une communication entre d'une part la sortie du compresseur de l'un des groupes turbocompresseurs et le passage de liaison et d'autre part l'entrée de la turbine du même groupe et le passage de transfert selon la valeur dudit paramètre de fonctionnement.

Comme paramètre de fonctionnement, on peut choisir par exemple la pression d'air de suralimentation, ou le débit de combustible injecté par cycle dans le moteur (position de la crémaillère de la pompe d'injection de combustible du moteur), ou la vitesse de rotation du moteur pour un moteur à quatre temps, ou encore le débit massique d'air traversant le moteur pour un moteur à deux temps.

Parmi les susdits moteurs, l'invention est relative plus particulièrement, mais non exclusivement, à ceux dans lesquels un passage de dérivation, muni d'une chambre de combustion auxiliaire, relie le passage de liaison commun au passage de transfert commun en contournant le moteur.

Un tel moteur est décrit dans la demande de brevet français 2 322 266 qui a été mise à la disposition du public le 25 mars 1977.

On sait que, lorsqu'il est unique, le groupe turbocompresseur d'un moteur suralimenté, avec ou sans passage de dérivation pour relier la sortie du compresseur à l'entrée de la turbine du groupe en contournant ainsi le moteur, est conçu et adapté de manière à délivrer au moins le débit d'air maximal traversant le moteur. Sur un moteur à quatre temps, ce débit est maximal à la vitesse maximale du moteur. Lorsque le moteur comporte un passage de dérivation, le compresseur renvoie directement à la turbine le débit d'air en excès qui ne traverse pas le moteur. Ce débit d'air en excès est évidemment maximal lorsque le moteur tourne à sa vitesse minimale ou, a fortiori, lorsque le moteur est à l'arrêt et que la chambre de combustion auxiliaire est en fonctionnement. Le débit d'air en excès dilue les gaz d'échappement du moteur et abaisse donc la température des gaz à l'entrée de la turbine: si cette température devient trop basse, l'énergie de ces derniers gaz est alors trop faible et la turbine tourne trop lentement ou s'arrête; le moteur n'est plus suffisamment suralimenté et fonctionne de façon incorrecte (émission de fumée à l'échappement, etc.). Si son rapport volumétrique est relativement faible, il peut même caler.

Pour qu'un tel incident ne puisse se produire, la pression de suralimentation doit être maintenue au-dessus d'un certain seuil dont la valeur est liée à celle du rapport volumétrique du moteur et il convient à cette fin de réchauffer les gaz qui pénètrent dans la turbine. Cette réchauffe est assurée par la chambre de combustion auxiliaire qui reçoit l'air circulant dans le passage de dérivation et qui peut brûler une quantité de combustible additionnelle. Cependant, la consommation de cette quantité additionnelle pénalise le moteur lors de son fonctionnement à bas régime.

Cette pénalisation est particulièrement importante pour les moteurs qui doivent fonctionner de longs moments à bas régime. C'est le cas notamment des moteurs assurant la propulsion des navires à hautes performances. Pour assurer notamment la propulsion à 35 nœuds (circonstance peu fréquente), on utilise par exemple un moteur développant 4000 kW à 1600 tours/minute et consommant 980 kg de combustible à l'heure dans ces conditions. Naviguant en croisière à 16 nœuds (circonstance beaucoup plus fréquente), ce même navire exige une puissance de 382 kW à 731 tours/minute. Dans ces conditions, le moteur consomme 99 kg de combustible à l'heure. Mais si ce moteur a un rapport volumétrique faible (7 par exemple), il faut maintenir sa pression de suralimentation au-dessus d'un certain seuil en brûlant une quarantaine de kg de combustible à l'heure dans la chambre de combustion auxiliaire. Il en résulte que la consommation horaire totale du moteur, c'est-à-dire y compris celle de ladite chambre, est supérieure d'environ un tiers à celle d'un moteur de même puissance mais ayant un rapport volumétrique plus élevé (12 par exemple), ce qui réduit d'autant l'autonomie de ce navire en croisière.

Pour éliminer ces inconvénients, il est souhaitable d'ajuster le débit d'air des moyens de suralimentation au débit d'air traversant le moteur. Dans le cas où le moteur est muni d'un passage de dérivation, on minimise ainsi l'excès d'air qui rejoint l'entrée de la turbine par l'intermédiaire du passage de dérivation, ce qui permet de réduire ou même d'annuler le débit du combustible additionnel qui est brûlé dans la chambre de combustion auxiliaire.

Dans la susdite demande de brevet français 2 322 266, on a proposé à cet effet de monter en parallèle plusieurs groupes turbocompresseurs, au mombre de quatre par exemple. Une soupape d'arrêt montée à l'entrée de la turbine de chaque groupe turbocompresseur et une soupape d'arrêt montée à la sortie du compresseur du même groupe sont actionnées par des moyens sensibles à la vitesse du moteur. On peut ainsi mettre en service un plus ou moins grand nombre de groupes turbocompresseurs, la soupape d'arrêt montée à l'entrée de chaque turbine étant ouverte aussi rapidement que possible mais fermée lentement. De plus, l'opération de branchement d'un groupe se fait à une vitesse du moteur plus élevée que l'opération de débranchement du même groupe. Un tel moteur est compliqué étant donné qu'il comporte un assez grand nombre de groupes turbocompresseurs travaillant en parallèle et de soupapes d'arrêt associées à ces groupes et que la commande des soupapes d'arrêt doit être modulée selon qu'il s'agit de les ouvrir ou de les fermer. De plus, même relativement lente, la manœuvre de fermeture de la soupape d'arrêt, montée à l'entrée de chaque turbine, risque de faire pénétrer dans la zone de pompage le point de fonctionnement du compresseur associé à cette turbine. Pour atténuer davantage ces phénomènes de pompage dont on sait qu'ils sont dangereux pour la tenue des compresseurs, certains constructeurs proposent actuellement d'augmenter au-delà de quatre le nombre des groupes turbocompresseurs susceptibles d'être mis successivement en service, ce qui complique encore davantage le moteur et augmente d'autant les risques d'incidents de fonctionnement.

On connaît d'après le brevet allemand 2 212 960 un moteur suralimenté comprenant un groupe turbocompresseur unique, susceptible d'être mis en œuvre pour alimenter le moteur et être mis à l'écart, l'aspiration du moteur étant alors reliée à l'atmosphère. Dans ce dernier cas, le compresseur est mis en communication avec la partie postérieure de turbine. La partie turbine comporte deux turbines reliées à l'échappement du moteur, l'une des turbines étant susceptible d'être mise en communication avec le compresseur. Cependant, l'autre turbine reste constamment en communication avec l'échappement du moteur, ce qui maintient la turbine en rotation à vitesse élevée. Les problèmes de pompage ne se produisent donc pas dans un tel dispositif, qui par ailleurs, reste assez complexe puisqu'il nécessite la présence de deux turbines.

L'invention a pour but d'agencer les moteurs du genre défini en préambule de façon telle qu'ils puissent fonctionner dans une large gamme de vitesses avec une consommation horaire totale qui reste raisonnable quelles que soient les conditions de fonctionnement, et ceci sans complication notable et sans risque d'apparition de phénomènes de pompage sur leurs compresseurs de suralimentation en fonctionnement transitoire.

Pour atteindre ce but, le moteur à combustion interne du genre susindiqué est essentiellement caractérisé, selon l'invention, en ce que les susdits moyens sensibles à un paramètre de fonctionnement du moteur sont agencés de façon telle que, en même temps qu'ils interrompent la susdite communication entre la sortie du compresseur d'un groupe et l'entrée de la turbine du même groupe, ils relient directement par un court-circuit la sortie de ce compresseur à l'entrée de la turbine du groupe et qu'inversement, en même temps qu'ils assurent ladite communication, ils interrompent le court-circuit entre la sortie de ce compresseur et l'entrée de ladite turbine.

De cette façon, lorsqu'on met hors service un groupe turbocompresseur, celui-ci continue à tourner sur sa lancée en ralentissant progressivement, l'air refoulé par le compresseur de ce groupe étant dévié par le court-circuit vers la turbine du même groupe. Par ailleurs, l'air refoulé par le ou les autres compresseurs qui restent en service et présent dans le passage de liaison ne risque pas de perturber l'écoulement dans le compresseur ainsi mis hors service. Tout phénomène de pompage se trouve donc évité dans ce dernier compresseur.

Selon un mode de réalisation préféré de l'invention, le moteur comporte seulement deux groupes turbocompresseurs qui sont en général identiques et qui peuvent être à un ou deux étages, avec ou sans refroidissement intermédiaire. Ceci permet de simplifier le moteur et ses auxiliaires et de diminuer en conséquence les risques d'incident de fonctionnement. Dans ce cas, les susdits moyens sensible à un paramètre de fonctionnement du moteur peuvent n'être prévus que sur l'un des deux groupes turbocompresseurs. Pour des raisons de sécurité, de tels moyens peuvent toutefois être montés symétriquement sur les deux groupes, ce qui permet de mettre en marche le moteur, même si l'un des deux groupes tombe en panne.

Dans le cas où le moteur comporte un passage de dérivation, l'invention présente un intérêt tout particulier lorsque le passage de dérivation est divisé en deux branches principales dont la première aboutit dans une zone de dilution ou «zone secondaire» située en aval de la partie amont ou «zone primaire» de la chambre de combustion auxiliaire et est munie de premiers moyens d'étranglement à section de passage variable et dont la deuxième branche part d'un endroit de la première branche situé en amont des premiers moyens d'étranglement et débouche dans la zone primaire par l'intermédiaire de seconds moyens d'étranglement de la section, les premiers moyens d'étranglement étant agencés de manière à établir une baisse de pression qui est pratiquement indépendante du rapport entre le débit d'air dans le passage de dérivation et le débit total d'air délivré par le ou les compresseurs mais qui varie dans le même sens que la pression régnant en amont des premiers moyens d'étranglement et des moyens étant prévus pour faire varier corrélativement le débit du combustible et le débit d'air introduits dans la zone primaire.

De cette façon, la même chambre de combustion auxiliaire et les mêmes moyens d'étranglement peuvent agir en combinaison soit avec un seul groupe turbocompresseur, soit avec deux tels groupes.

On obtient une solution praticulièrement simple en incorporant aux susdits moyens sensibles à un paramètre de fonctionnement du moteur des moyens distributeurs à quatre voies entre la sortie du compresseur du groupe susvisé, l'entrée de la turbine du même groupe, le passage de liaison et le passage de transfert.

Lorsque le susdit paramètre de fonctionnement du moteur est constitué par la vitesse de celui-ci, les moyens sensibles à la vitesse du moteur sont de préférence agencés pour agir approximativement au même seuil de vitesse du moteur et aussi vite que possible, à la fois lorsqu'ils interrompent et assurent la susdite communication. Ceci simplifie considérablement le système de commande de ces moyens.

Selon une constructions particulièrement judicieuse, les moyens sensibles à un paramètre de fonctionnement du moteur sont combinés à un système de lancement, de préférence à jet d'air comprimé, associé à celui des groupes turbocompresseurs qui est susceptible d'être mis hors d'action de façon à mettre ce système de lancement en action avant d'assurer la communication entre d'une part la sortie du compresseur de ce groupe et le passage de liaison et d'autre part l'entrée de la turbine du même groupe et le passage de transfert. Cette construction facilite le fonctionnement lors des transitions entre la marche à vitesse moyenne et la marche à grande vitesse.

L'invention a également pour objet un procédé de mise en marche et de réglage de la vitesse d'un moteur à combustion interne suralimenté, plus particulièrement d'un moteur Diesel suralimenté, comprenant au moins deux compresseurs, dont les sorties sont susceptibes d'être reliées en parallèle, par un passage de liaison commun, à l'admission du moteur et à un passage de dérivation muni d'une chambre de combustion auxiliaire ainsi que des turbines, dont chacune entraîne mécaniquement l'un des compresseurs en formant avec lui un groupe turbocompresseur et dont les entrées sont susceptibles d'être reliées en parallèle, par un passage de transfert commun, à l'échappement du moteur et à la sortie de la chambre de combustion auxiliaire, caractérisé en ce qu'au démarrage, on lance le premier des groupes turbocompresseurs après avoir court-circuité le ou les autres groupes en reliant la sortie du ou de chaque compresseur de ce ou ces autres groupes, à l'entrée de sa turbine, en même temps que l'on envoie et allume du combustible dans la chambre de combustion auxiliaire en quantité suffisante pour assurer l'autonomie du premier groupe à une pression de refoulement de son compresseur suffisante pour permettre le démarrage du moteur, compte tenu du rapport volumétrique de ce dernier;

– puis en ce qu'on lance le moteur et on l'accélère jusqu'à ce que le rapport entre le débit d'air traversant le moteur et le débit total d'air délivré par les compresseurs atteigne un seuil de rapport de valeur déterminée;

– puis, à partir du moment où ladite valeur du seuil de rapport est atteinte et dépassée pendant un laps de temps minimum, en ce qu'on lance un deuxième groupe turbocompresseur et, dès que sa vitesse de rotation ou sa pression de refoulement atteint un premier seuil de fonctionnement déterminé, on rétablit les communications normales de ce deuxième turbocompresseur et on charge le moteur;

– puis on lance successivement les autres groupes, s'il en existe, avec rétablissement des communciations normales à des seuils de fonctionnement successifs;

– puis, lorsque le seuil de fonctionnement précédemment dépassé est franchi en sens inverse, on court-circuite aussi rapidement que possible le dernier des groupes turbocompresseurs mis en marche et on laisse le moteur fonctionner suralimenté par le ou les autres groupes, et ainsi de suite pour la mise hors d'action ou en action de l'un des groupes.

Dans le cas où le passage de dérivation est divisé en deux branches principales dont la première aboutit dans une zone de dilution ou «zone secondaire» située en aval de la partie amont ou «zone primaire» de la chambre de combustion auxiliaire et est munie de premiers moyens d'étranglement à section de passage variable et dont la deuxième branche part d'un endroit de la première branche située en amont des premiers moyens d'étranglement et débouche dans la zone primaire par l'intermédiaire de seconds moyens d'étranglement de la section, les premiers moyens d'étranglement étant agencés de manière à établir une baisse de pression qui est pratiquement indépendante du rapport entre le débit d'air dans le passage de dérivation et le débit d'air total délivré par le ou les compresseurs mais qui varie dans le même sens que la pression régnant en amont des premiers moyens d'étranglement, le susdit procédé peut en outre être caractérisé en ce que, chaque fois qu'on lance un groupe turbocompresseur, on oblige les premiers moyens d'étranglement à occuper momentanément leur position de pleine ouverture.

L'invention va être maintenant décrite plus en détail à l'aide des dessins schématiques annéexés.

Les fig. 1 et 2 de ces dessins montrent les éléments essentiels d'un moteur conforme à l'invention, dans les positions qu'ils occupent respectivement selon que la vitesse du moteur est relativement basse ou relativement élevée.

La fig. 3 représente un système de commande oléopneumatique pour le moteur des fig. 1 et 2, dans une position correspondant à celle de la fig. 1.

La fig. 4 représente un extrait de la fig. 3, dans une position correspondant à celle de la fig. 2.

La fig. 5 illustre le procédé de mise en marche et de réglage de la vitesse d'un moteur conforme à l'invention.

La fig. 6 représente une variante d'un détail du moteur des fig. 1 et 2.

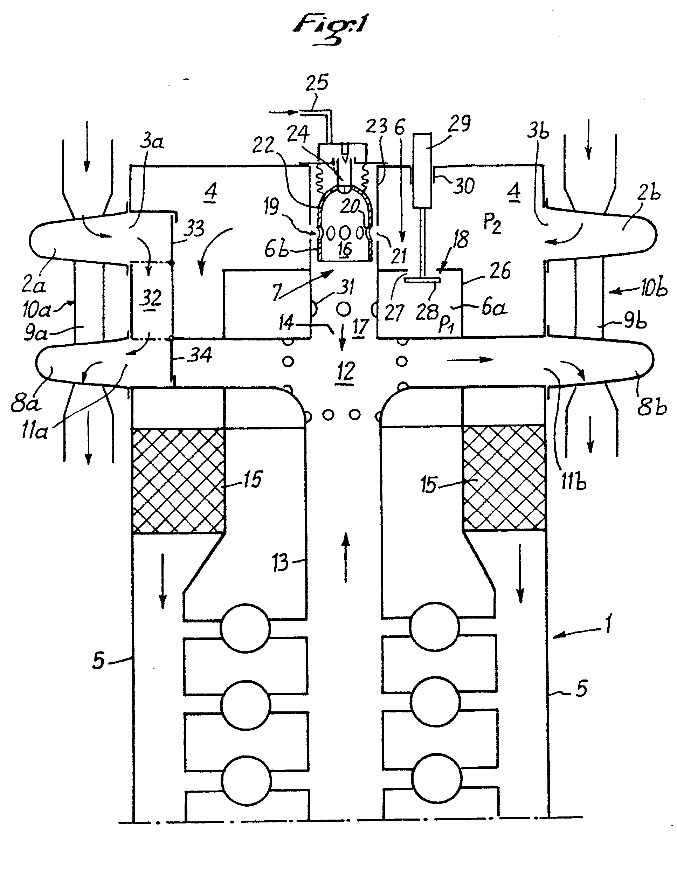

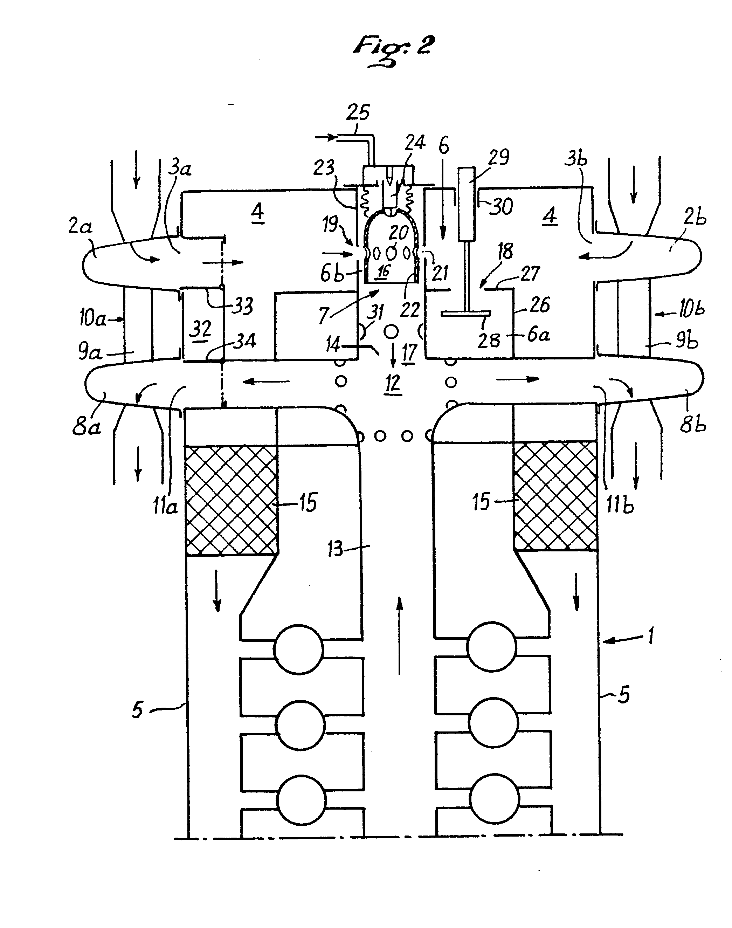

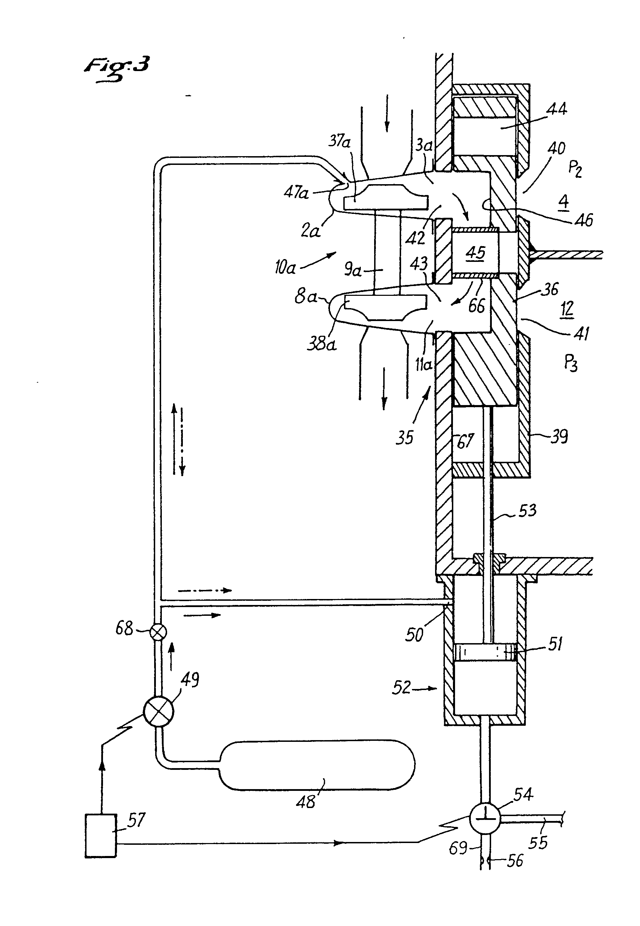

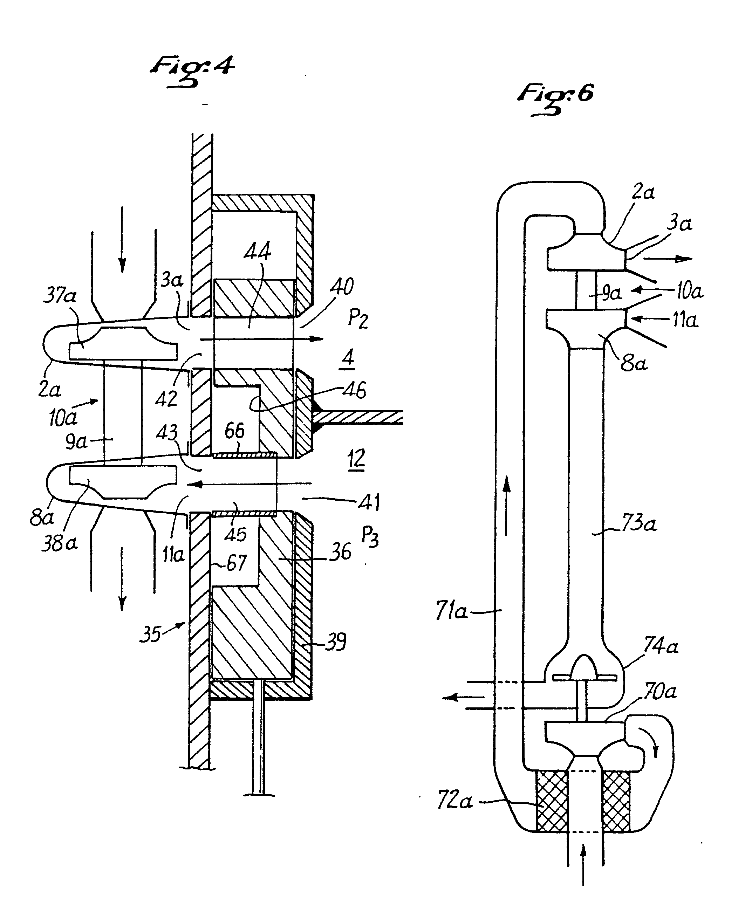

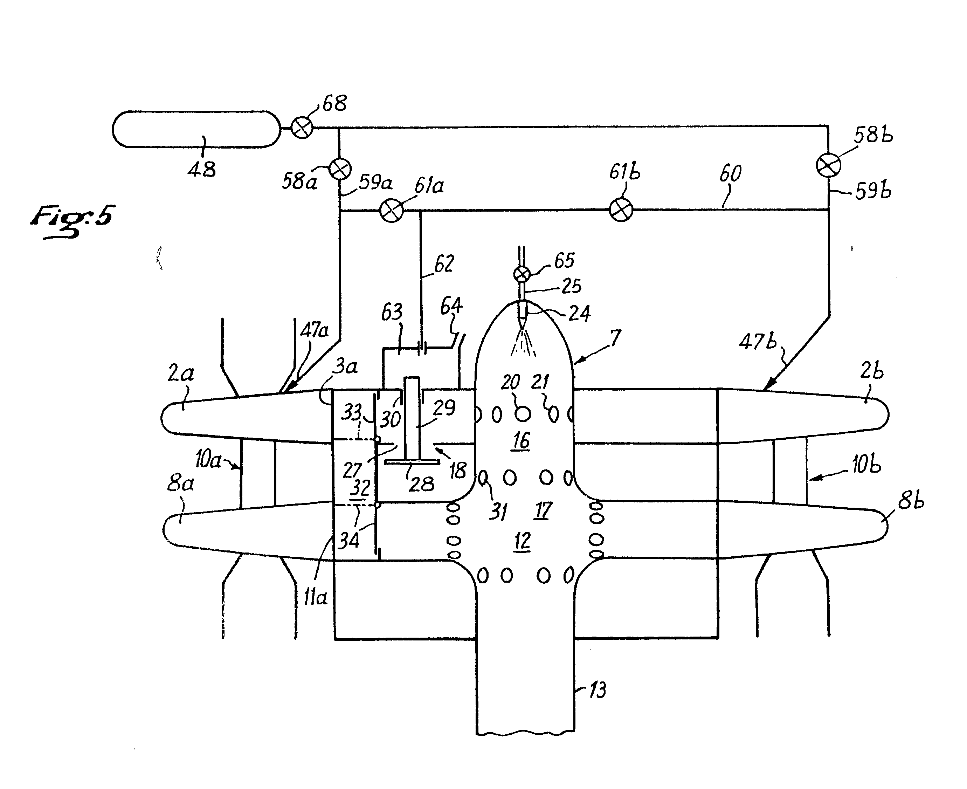

Le moteur Diesel suralimenté 1, qui est représenté aux fig. 1 et 2, comprend:
deux compresseurs 2a et 2b dont les sorties 3a et 3b sont susceptibles d'être reliées, par un passage de liaison commun 4, au collecteur d'admission 5 (simple ou double) du moteur 1 et de préférence aussi à un passage de dérivation 6 muni d'une chambre de combustion auxiliaire 7,

ainsi que deux turbines 8a et 8b dont chacune entraîne mécaniquement, par exemple à l'aide d'un arbre commun 9a ou 9b, l'un des compresseurs 2a, 2b, en formant avec lui un groupe turbocompresseur 10a ou 10b et dont les entrées 11a et 11b sont susceptibles d'être reliées, par un passage de transfert commun 12, au collecteur d'échappement 13 (simple ou double) du moteur 1 et à la sorte 14 de la chambre de combustion auxiliaire 7, et

des moyens non représentés qui sont sensibles à la vitesse du moteur 1 et qui sont agencés pour interrompre ou assurer une communication d'une part entre la sortie 3a du compresseur 2a du groupe 10a et le passage de liaison 4 et d'autre part entre l'entrée 11a de la turbine 8a du même groupe 10a et le passage de transfert 12 selon que la vitesse du moteur 1 est moins ou plus élevée. Un refroidisseur d'air de suralimentation 15 est généralement disposé en amont du collecteur d'admission 5.

Les moyens sensibles à la vitesse du moteur peuvent être constitués par n'importe quel système tachymétrique tel que régulateur à boules ou dynamo tachymétrique ou dispositif sensible à une pression d'huile en aval d'un pompe à engrenage.

La chambre de combustion auxiliaire 7 est de préférence agencée conformément à la demande de brevet français n° 79 31038 du 19 décembre 1979 (non encore publiée). Cette chambre 7 est divisée, d'amont en aval, en une zone primaire 16 et en une zone secondaire 17 ou zone de dilution. Le passage de dérivation 6 est divisé en deux branches principales 6a et 6b. La première branche 6a aboutit dans la zone secondaire 17 et est munie de premiers moyens d'étranglement 18 à section de passage variable. La deuxième branche 6b part d'un endroit de la première branche 6a situé en amont des premiers moyens d'étranglement 18 et débouche dans la zone primaire 16 par l'intermédiaire de seconds moyens d'étranglement 19 de la section de passage. Les seconds moyens d'étranglement 19 comprennent des orifices conjugués 20 et 21, ménagés respectivement dans un fourreau cylindrique intérieur 22 qui délimite au moins en partie la zone primaire 16 et dans un fourreau cylindrique extérieur 23 qui délimite au moins en partie le passage de liaison 4. Au moins un injecteur de combustible 24 débouche dans la zone primaire 16 à proximité immédiate des orifices d'étranglement conjugués 20, 21 et reçoit du combustible liquide par une canalisation 25. Des moyens font varier corrélativement le débit du ou des injecteurs de combustible 24 et, par un déplacement relatif des fourreaux 22 et 23, le débit d'air entrant dans la zone primaire 16 par la section libre commune des orifices conjugués 20, 21.

La première branche 6a du passage de dérivation 6 est limitée par un caisson 26 percé d'un trou dont le bord forme un siège 27 avec lequel coopère un disque obturateur 28 situé en aval de ce siège. Le disque 28 est solidaire d'un piston d'équilibrage 29 qui traverse le siège 27 ainsi que, par l'intermédiaire de moyens d'étanchéité 30, la paroi du passage de liaison 4. Le disque 28 à piston 29, qui constitue les premiers moyens d'étranglement 18, est en équilibre sous l'effet d'une pression de référence $P_o$ qui s'exerce sur la section du piston 29, à la partie supérieure ou extérieure de celui-ci, et des pressions régnant en amont (pression $P_2$) et en aval (pression $P_7$) du disque obturateur 28 et qui s'exercent respectivement sur la face supérieure et sur la face inférieure du disque 28. Si on appelle s la section du piston 29 et S la section du disque 28, les conditions d'équilibre du disque 28 et du piston 29 s'expriment par la relation suivante:

$$\frac{P_2 - P_7}{P_2 - P_o} = \frac{s}{S} \qquad (1).$$

On voit donc que les premiers moyens d'étranglement 18 à disque 28 sont capables d'établir une baisse de pression $P_2 - P_7$ qui est pratiquement indépendante du rapport entre le débit d'air dans le passage de dérivation 6 et le débit total d'air délivré par les compresseurs 2a, 2b mais qui varie dans le même sens que la pression $P_2$ régnant en amont de ces premiers moyens d'étranglement 18.

La branche 6a du passage de dérivation 6 rejoint la branche 6b au niveau de la zone secondaire 17 par l'intermédiaire d'orifices 31 de façon que l'air entrant par ces orifices dilue les gaz de combustion provenant de la zone primaire 16.

Le collecteur d'échappement 13 et la zone secondaire 17 de la chambre de combustion 7 aboutissent tous deux au susdit passage de transfert 12.

Pour faire varier corrélativement le débit du combustible introduit par le ou les injecteurs 24 et le débit d'air introduit par les orifices conjugués, on a recours à des solutions connues telles que celles décrites dans la susdite demande de brevet français 79 31038 ou dans le brevet US 4 026 115.

On obtient ainsi un moteur à combustion interne dont on va rappeler ci-après le fonctionnement d'ensemble, à supposer que les compresseurs 2a, 2b fonctionnent tous deux.

L'air délivré par les compresseurs 2a, 2b se divise en deux courants: l'air qui traverse le moteur 1 et le courant complémentaire qui rejoint les turbines 8a, 8b à travers le passage de dérivation 6. Ce courant complémentaire se divise à nouveau en deux: une première partie qui alimente la zone primaire 16 à travers les orifices conjugués 20, 21, en proportion de préférence stœchiométrique avec le combustible introduit par le ou les injecteurs 24, et une deuxième partie qui pénètre dans la zone secondaire 17 par les orifices 31, cette deuxième partie du courant complémentaire ayant préalablement traversé les premiers moyens d'étranglement 18 et venant diluer les gaz de combustion très chauds issus de la zone primaire 16. Quand le moteur 1 accélère, le débit d'air qui le traverse augmente et le débit du courant complémentaire diminue dans le passage de dérivation 6. Les premiers moyens d'étranglement 18 se ferment donc progressivement et diminuent de plus en plus le débit d'air admis dans la zone secondaire 17. L'air admis dans la zone primaire 16, dont le débit ne dépend que de la pression et donc de la charge du moteur 1 (et non de la vitesse de celui-ci), continue à assurer la combustion dans cette zone primaire 16 dans des conditions aussi voisines que possible de la stœchiométrie.

Cela étant rappelé, conformément à l'invention, on agence les susdits moyens sensibles à la vitesse du moteur 1 de façon telle que, en même temps qu'ils interrompent la communication d'une part entre la sortie 3a du compresseur 2a du groupe 10a et le passage de liaison 4 et d'autre part entre l'entrée 11a de la turbine 8a du même groupe 10a et le passage de transfert 12, ils relient par un court-circuit 32 la sortie 3a de ce compresseur 2a à l'entrée 11a de la turbine 8a (fig. 1). Inversement, on agence les susdits moyens sensibles à la vitesse du moteur 1 de façon telle que, en même temps qu'ils assurent la communication entre d'une part la sortie 3a du compresseur 2a et le passage de liaison 4 et d'autre part entre l'entrée 11a de la turbine 8a et le passage de transfert 12, ils interrompent le court-circuit 32 entre la sortie 3a du compresseur 2a et l'entrée 11a de la turbine 8a (fig. 2).

Comme schématisé aux fig. 1 et 2, on peut faire comprendre aux susdits moyens sensibles à la vitesse du moteur 1 soit deux vannes à trois voies 33 et 34 constituées par exemple par des volets pivotant et montées respectivement sur la sortie 3a du compresseur 2a et sur l'entrée 11a de la turbine 8a, soit plus avantageusement par un distributeur à quatre voies 35 qui est illustré (à une échelle grossie par rapport au groupe turbocompresseur) aux fig. 3 et 4, ces vannes 33, 34 ou ce distributeur 35 étant actionnés en fonction de la vitesse du moteur 1 ainsi qu'il sera expliqué ultérieurement.

Selon le mode de réalisation des fig. 3 et 4, on a supposé que le distributeur à quatre voies 35 était du type à tiroir coulissant 36 mais il va de soi qu'on pourrait aussi bien avoir recours à un distributeur à boisseau rotatif équivalent. Aux fig. 3 et 4, on voit les éléments 2a, 3a, 4a, 8a, 9a, 10a, 11a et 12 des fig. 1 et 2 et qui n'ont donc pas besoin d'être décrits à nouveau. On voit en outre en 37a et 38a les rotors du compresseur 2a et de la turbine 8a respectivement, ces rotors étant tous deux solidaires de l'arbre 9a.

Le tiroir 36 se déplace à l'intérieur d'un boîtier 39 qui comprend quatre orifices 40, 41, 42 et 43 communiquant respectivement avec le passage de liaison 4 (air de suralimentation à la pression $P_2$), avec le passage de transfert 12 (gaz d'échappement et de combustion à la pression $P_3$), avec

la sortie 3a du compresseur 2a et avec l'entrée 11a de la turbine 8a. Le tiroir 36 est traversé par deux trous 44 et 45 et comporte un évidement (ou gorge) longitudinal 46 tourné vers le côté des orifices 42 et 43, les orifices 40 et 41 s'ouvrant de l'autre côté.

L'ensemble est tel que:
– ou bien l'évidement 46 fait communiquer l'orifice 42 avec l'orifice 43, c'est-à-dire la sortie 3a du compresseur 2a avec l'entrée 11a de la turbine 8a, les trous 44 et 45 se trouvant en face de parties pleines du boîtier 39 (fig. 3 dont la position correspond à celle de la fig. 1);
– ou bien le trou 44 fait communiquer l'orifice 42 avec l'orifice 40, c'est-à-dire la sortie 3a du compresseur avec le passage de liaison 4, et d'autre part le trou 45 fait communiquer l'orifice 41 avec l'orifice 43, c'est-à-dire le passage de transfert 12 avec l'entrée 11a de la turbine 8a, l'évidement 46 se trouvent en face de parties pleines du boîtier 39 (fig. 4 dont la position correspond à celle de la fig. 2).

De préférence, le trou 45 est prolongé par un fourreau cylindrique 66 qui a pour double but de guider l'écoulement des gaz chauds dans la turbine 8a en évitant l'éclatement du jet dans l'évidement 46 et de réduire au minimum le contact des gaz chauds avec les parties mécaniques du tiroir 36. Lorsque ce tiroir est en position de court-circuit (fig. 3) et que celui-ci, sous l'effet des pressions $P_2$ et $P_3$, est en appui sur la face 67 du boîtier 39 qui est tournée vers la turbine 8a, le fourreau 66 est également en appui et s'oppose à toute fuite d'air ($P_2$) ou de gaz ($P_3$) vers l'évidement 46 et finalement vers l'atmosphère à travers le turbocompresseur 10a à l'arrêt. La chute de pression qui est créée par les moyens d'étranglement 18 et qui sert à balayer le moteur 1 ($P_2$ étant supérieure à $P_3$) sert également à balayer par de l'air frais le distributeur à quatre voies 35, ce qui interdit tout reflux de gaz dans le mécanisme en s'opposant à son encrassement et facilite son refroidissement. Il est à noter que le fourreau 66 présenterait les mêmes avantages avec un distributeur à boisseau rotatif.

On asservit de préférence le distributeur à quatre voies 35 (à tiroir ou à boisseau), ou les deux vannes à trois voies 33, 34 à un système 57 (fig. 3) propre à mesurer la vitesse du moteur 1 et à émettre un signal électrique de commande lorsque la vitesse du moteur 1 franchit pratiquement le même seuil N à l'accélération et à la décélération.

De préférence encore, les moyens sensibles à la vitesse du moteur 1 sont combinés à un système de lancement qui pourrait être de type électrique ou hydraulique (roue Pelton) mais qui est de préférence du type à jet d'air comprimé, connu sous le nom de «jet assistance». Un tel système, qui est schématisé en 47a à la fig. 3, est propre à envoyer sur l'aubage du rotor 37a du compresseur 2a un jet d'air orienté de façon à lancer l'ensemble de ce compresseur 2a et de la turbine 8a qui lui est associée, dans le sens convenable.

A cet effet, une bouteille d'air comprimé (à 40 bars par exemple) 48 peut être reliée, par l'intermédiaire d'une électrovanne 49 et d'un détendeur 68, directement au système de lancement 47a et, par l'intermédiaire d'un orifice 50, sur l'un des côtés du piston 51 d'un vérin à double effet 52. Ce piston 51 est attelé par une tige 53 au tiroir 36 et peut être relié sur son autre côté, par l'intermédiaire d'une électrovanne à trois voies 54, soit à une canalisation d'huile sous pression 55, soit à un circuit de retour à basse pression 69 par l'intermédiaire d'un orifice calibré 56. Les deux électrovannes 49 et 54 sont asservies au système 57.

Partant de la position de la fig. 3 où le groupe turbocompresseur 10a est à l'arrêt et où l'électrovanne 54 est en une position faisant communiquer la canalisation d'huile sous pression 55 avec le dessous du piston 51, lorsque le système 57 décèle que la vitesse du moteur 1 dépasse le seuil critique, il envoie un signal aux électrovannes 49 et 54. Ce signal oblige l'électrovanne 49 à faire communiqeur la bouteille d'air comprimé 48 à la fois avec le système de lancement 47a, qui agit immédiatement sur le rotor 37a du compresseur 2a, et avec le dessus du piston 51. En même temps, l'électrovanne 54 est en une position mettant le dessous du piston 51 en communication avec le circuit de retour 69 par l'intermédiaire de l'orifice calibré 56. Il en résulte que le piston 51 amène le tiroir 36 à la position de la fig. 4 avec un retard suffisant pour que le groupe turbocompresseur 10a soit lancé au moment où sa turbine 8a commence à recevoir les gaz chauds, lors de l'arrivée du tiroir 36 à la position de la fig. 4. L'électrovanne 49 se ferme ensuite et c'est de l'air, prélevé sur le refoulement du compresseur 2a par l'intermédiaire de l'orifice 47a, qui maintient en pression la face supérieure du piston 51 (comme schématisé par les flèches en trait mixte de la fig. 3).

Lorsqu'on part de la position de la fig. 4 où le groupe turbocompresseur 10a est en marche et que le système 57 décèle que la vitesse du moteur 1 tombe au-dessous du seuil critique, ce système 57 envoie un signal à l'électrovanne 54 qui se met en une position faisant communiquer à nouveau la canalisation d'huile sous pression 55 avec le dessous du piston 51, l'ensemble reprenant alors la position de la fig. 3.

Le procédé de mise en marche et de réglage de la vitesse du moteur 1 va être exposé maintenant à l'aide de la fig. 5 qui reproduit les éléments essentiels des fig. 1, 2 et 3. Le compresseur 2b comporte un système de lancement 47b analogue à celui 47a du compresseur 2a.

Deux électrovannes 58a et 58b sont montées sur deux canalisations 59a et 59b reliant la bouteille d'air comprimé 48 aux deux systèmes de lancement 47a et 47b respectivement. Une canalisation auxiliaire 60 relie entre elles les parties des canalisations 59a et 59b qui sont situées en aval des électrovannes 58a et 58b respectivement. Cette canalisation auxiliaire 60 est munie de deux électrovannes 61a et 61b d'entre lesquelles part une canalisation 62. Celle-ci aboutit à une chambre 63 dans laquelle émerge la partie supérieure du piston 29, cette chambre 63 étant reliée à l'air libre par un orifice de fuite calibré 64. Enfin, une électrovanne 65 est montée sur la canalisation de combustible 25 qui alimente la chambre de combustion auxiliaire 7.

Lorsque le moteur 1 est à l'arrêt, les électrovannes 58a et 58b sont fermées. Avant de lancer le moteur 1, le distributeur 36 est mis en position correspondant à la fig. 3 en faisant communiquer la face arrière du piston 51 avec la canalisation sous pression 55, grâce à l'électrovanne 54, puis on commence par lancer le groupe turbocompresseur 10b en laissant l'électrovanne 58a fermée et en ouvrant l'électrovanne 58b de façon que le système de lancement 47b insuffle de l'air comprimé sur l'aubage du rotor du compresseur 2b. En tournant, celui-ci envoie de l'air dans la zone primaire 16 de la chambre de combustion auxiliaire 7 par les orifices 20, 21 et dans la zone secondaire 17 par les orifices 31. Lorsqu'on ouvre l'électrovanne 61b, on envoie de l'air comprimé dans la chambre 63 qui, compte tenu de l'orifice calibré 64, est mise en pression. L'orifice 64 doit être déterminé de façon telle que les moyens d'étranglement 18 soient ouverts en grand, ce qui donne sa plus grande section au passage de dérivation 6 pendant l'opération de lancement du turbocompresseur 10b. Lorsque l'électrovanne 61b (ou 61a) est refermée, la chambre 63 est à nouveau mise à la pression atmosphérique par l'intermédiaire de l'orifice 64 et les moyens d'étranglement 18 reprennent leur régulation normale selon la relation (1) ci-dessus. En même temps que l'électrovanne 58b, on ouvre l'électrovanne 61b, de façon à envoyer de l'air comprimé dans la chambre 63 et à ouvrir ainsi la soupape 27, 28, et on ouvre l'électrovanne 65, de façon que le ou les injecteurs 24 délivrent un débit de combustible suffisant pour assurer l'autonomie du groupe turbocompresseur 10b, en même temps que l'on provoque l'allumage de la chambre de combustion auxiliaire 7. Dès que le groupe turbocompresseur 10b tourne en autonomie, on ferme l'électrovanne 58b.

Puis on lance le moteur 1 qui aspire alors l'air refoulé par le compresseur 2b et on l'accélère jusqu'à sa vitesse de croisière (inférieure au seuil critique défini ci-dessus).

Si le système 57 (fig. 3) décèle que la vitesse du moteur 1 dépasse son seuil critique, on ouvre l'électrovanne 58a de façon à assurer la montée en régime et par conséquent en pression du groupe turbocompresseur 10a. Quand une certaine pression est établie par le turbocompresseur 10a, celui-ci est mis en circuit par passage du tiroir 36 de la position de la fig. 3 à celle de la fig. 4. Comme de l'air frais est envoyé dans le passage de dérivation 6 par ce turbocompresseur, la chambre de combustion auxiliaire 7 fournit l'appoint d'énergie à la turbine 8a en même temps que l'électrovanne 58a est fermée. On charge le moteur 1 jusqu'à sa vitesse normale.

Pour revenir au régime de croisière, on isole le turbocompresseur 10a par passage du tiroir 36 de la position de la fig. 4 à celle de la fig. 3.

Pour arrêter le moteur 1, on arrête l'arrivée du combustible dans le moteur ainsi que dans la chambre de combustion auxiliaire 7.

Il va de soi que l'invention n'est pas limitée aux modes de réalisation décrits jusqu'ici. En particulier, au lieu d'être à un seul étage, chaque groupe turbocompresseur 10a, 10b peut constituer le deuxième étage d'un groupe de suralimentation comme schématisé à la fig. 6 pour le groupe turbocompresseur 10a. Le premier étage comprend un compresseur 70a dont le conduit de réfoulement 71a, équipé d'un refroidisseur intermédiaire 72a, aboutit à l'entrée du compresseur 2a. La sortie de la turbine 8a est reliée par un conduit 73a à l'entrée d'une turbine 74a qui entraîne mécaniquement le compresseur 70a et qui constitue avec celui-ci le premier étage.

De même, le distributeur 35 ou les vannes 33, 34 pourraient être actionnés non pas en fonction de la vitesse du moteur 1 mais en fonction d'un autre paramètre de fonctionnement du moteur dont des exemples ont été donnés ci-dessus.

Enfin, bien que l'invention présente un intérêt tout particulier lorsque le moteur 1 comporte un passage de dérivation 6 à chambre de combustion auxiliaire 7, ces éléments 6 et 7 ne sont pas indispensables à la réalisation de l'invention.

Bien que la description détaillée de l'invention ait été faite à propos d'un moteur Diesel, il est bien entendu que l'invention s'applique aux autres types de moteurs à combustion interne.

## Revendications

1. Moteur à combustion interne suralimenté, notamment moteur Diesel suralimenté, comprenant, d'une part, au moins deux compresseurs (2a, 2b), dont les sorties (3a, 3b) sont susceptibles d'être reliées en parallèle, par un passage de liaison commun (4), à l'admission d'air (5) du moteur, ainsi que des turbines (8a, 8b), dont chacune entraîne mécaniquement l'un des compresseurs en formant avec lui un groupe turbocompresseur et dont les entrées (11a, 11b) sont susceptibles d'être reliées en parallèle, par un passage de transfert commun (12), à l'échappement (13) du moteur et, d'autre part, des moyens qui sont sensibles à un paramètre de fonctionnement du moteur représentatif du rapport entre le débit d'air traversant le moteur et le débit d'air total délivré par les compresseurs, et qui sont agencés pour interrompre ou assurer une communication entre, d'une part, la sortie (3a) du compresseur (2a) de l'un des groupes turbocompresseurs et le passage de liaison (4) et, d'autre part, l'entrée (11a) de la turbine (8a) du même groupe et le passage de transfert (12) selon la valeur dudit paramètre, caractérisé en ce que les susdits moyens sensibles à un paramètre de fonctionnement du moteur sont agencés de façon telle que, en même temps qu'ils interrompent la susdite communication avec la sortie (3a) du compresseur (2a) d'un groupe et avec l'entrée (11a) de la turbine (8a) du même groupe, ils relient aussi directement par un court-circuit (32) la sortie (3a) de ce compresseur à l'entrée (11a) de la turbine du groupe et qu'inversement en même temps qu'ils assurent ladite communication, ils interrompent le court-circuit (32) entre la sortie (3a) de ce compresseur et l'entrée (11a) de ladite turbine.

2. Moteur à combustion interne selon la revendication 1, caractérisé en ce qu'un passage de dérivation (6), muni d'une chambre de combustion auxiliaire (7), relie le passage de liaison commun (4) au passage de transfert commun (12) en contournant le moteur.

3. Moteur à combustion interne selon l'une des revendications 1 et 2, caractérisé en ce qu'il comporte seulement deux groupes turbocompresseurs (10a, 10b).

4. Moteur à combustion interne selon la revendication 3, caractérisé en ce que les deux groupes turbocompresseurs sont identiques.

5. Moteur à combustion interne selon la revendication 2, seule ou en combinaison avec l'une des revendications 3 et 4, caractérisé en ce que le passage de dérivation (6) est divisé en deux branches principales dont la première (6a) aboutit dans une zone de dilution (17) ou «zone secondaire» située en aval de la partie amont (16) ou «zone primaire» de la chambre de combustion auxiliaire (7) et est munie de premiers moyens d'étranglement (18) à section de passage variable et dont la deuxième branche (6b) part d'un endroit de la première branche (6a) situé en amont des premiers moyens d'éntranglement (18) et débouche dans la zone primaire (16) par l'intermédiaire de seconds moyens d'étranglement (19) de la section, les premiers moyens d'étranglement (18) étant agencés de manière à établir une baisse de pression qui est pratiquement indépendante du rapport entre le débit d'air dans le passage de dérivation (6) et le débit total d'air délivré par le ou les compresseurs mais qui varie dans le même sens que la pression régnant en amont des premiers moyens d'étranglement (18) et des moyens étant prévus pour faire varier corrélativement le débit du combustible et le débit d'air introduits dans la zone primaire (16).

6. Moteur à combustion interne selon l'une quelconque des revendications 1 à 5, caractérisé en ce que les moyens sensibles à un paramètre de fonctionnement du moteur comportent des moyens distributeurs à quatre voies (35) entre la sortie (3a) du compresseur du groupe susvisé, l'entrée (11a) de la turbine du même groupe, le passage de liaison (4) et le passage de transfert (12).

7. Moteur à combustion interne selon l'une quelconque des revendications 1 à 6, dans lequel le paramètre de fonctionnement du moteur est la vitesse de rotation de celui-ci, caractérisé en ce que les moyens sensibles à la vitesse du moteur sont agencés pour agir approximativement au même seuil de vitesse du moteur et aussi vite que possible, à la fois lorsqu'ils interrompent et assurent la susdite communication.

8. Moteur à combustion interne selon l'une quelconque des revendications 1 à 7, caractérisé en ce que les moyens sensibles à un paramètre de fonctionnement du moteur sont combinés à un système de lancement (47a, 48), de préférence à jet d'air comprimé, associé à celui des groupes turbocompresseurs (10a) qui est susceptible d'être mis hors d'action de façon à mettre ce système de lancement en action avant d'assurer la communication entre d'une part la sortie (3a) du compresseur de ce groupe et le passage de liaison (4) et d'autre part l'entrée (11a) de la turbine du même groupe et le passage de transfert (12).

9. Moteur à combustion interne selon la revendication 6, caractérisé en ce que le distributeur (35) est constitué par un boîtier (39) et par un organe mobile (36) par rapport à ce boîtier; en ce que le boîtier (39) possède d'un côté un premier orifice (40) communiquant avec le passage de liaison (4) et un deuxième orifice (41) communiquant avec le passage de transfert (12) et de l'autre côté un troisième orifice (42) communiquant avec la sortie (3a) du compresseur et un quatrième orifice (43) communiquant avec l'entrée (11a) de la turbine du groupe (10a) à court-circuiter; en ce que l'organe mobile (36) est traversé par un premier trou (44) propre à faire communiquer le premier orifice (40) avec le troisième orifice (42) du boîtier (39) et un deuxième trou (45) capable de faire communiquer le deuxième orifice (41) avec le quatrième orifice (43) du boîtier et comporte un évidement (46) propre à établir le court-circuit entre les troisième (42) et quatrième (43) orifices; et en ce que le deuxième trou (45) est prolongé à l'intérieur de l'évidement par un fourreau (66) capable de s'appuyer par son extrémité libre contre la face correspondante du boîtier (39).

10. Procédé de mise en marche et de réglage de la vitesse d'un moteur à combustion interne suralimenté, notamment d'un moteur Diesel suralimenté, comprenant au moins deux compresseurs (2a, 2b), dont les sorties (3a, 3b) sont susceptibles d'être reliées en parallèle, par un passage de liaison commun (4), à l'admission du moteur (5) et à un passage de dérivation (6) muni d'une chambre de combustion auxiliaire (7), ainsi que des turbines (8a, 8b), dont chacune entraîne mécaniquement l'un des compresseurs (2a, 2b) en formant avec lui un groupe turbocompresseur (10a, 10b) et dont les entrées (11a, 11b) sont susceptibles d'être reliées en parallèle, par un passage de transfert commun (12), à l'échappement (13) du moteur et à la sortie (14) de la chambre de combustion auxiliaire (7), caractérisé en ce qu'au démarrage, on lance le premier (10b) des groupes turbocompresseurs après avoir court-circuité le ou les autres groupes (10a) en reliant la sortie (3a) du ou de chaque compresseur (2a) de ce ou ces autres groupes à l'entrée (11a) de sa turbine (8a) en même temps que l'on envoie et allume du combustible dans la chambre de combustion auxiliaire (7) en quantité suffisante pour assurer l'autonomie du premier groupe (10b) à une pression de refoulement de son compresseur (2b) suffisante pour permettre le démarrage du moteur, compte tenu du rapport volumétrique de ce dernier;

– puis en ce qu'on lance le moteur et on l'accélère jusqu'à ce que le rapport entre le débit d'air traversant le moteur et le débit total d'air délivré par le compresseur (2b) atteigne un seuil de rapport de valeur déterminée;

– puis, à partir du moment où ladite valeur du seuil de rapport est atteinte et dépassée pendant le laps de temps minimum, en ce qu'on lance un deuxième groupe turbocompresseur (10a) et, dès que sa vitesse de rotation ou sa pression de refoulement atteint un premier seuil de fonctionnement déterminé, on rétablit les communications normales de ce deuxième turbocompresseur (10a) et on charge le moteur;

– puis on lance successivement les autres groupes s'il en existe avec rétablissement des communications normales à des seuils de fonctionnement successifs;

– puis, lorsque le seuil de fonctionnement précédemment dépassé est franchi en sens inverse, on court-circuite aussi rapidement que possible le dernier (10a) des groupes turbocompresseurs mis en marche et on laisse le moteur fonctionner suralimenté par le ou les autres groupes (10b), et ainsi de suite pour la mise hors d'action ou en action de l'un des groupes.

11. Procédé selon la revendication 10 pour la mise en marche et le réglage de la vitesse d'un moteur dans lequel le passage de dérivation (6) est divisé en deux branches principales (6a, 6b) dont la première (6a) aboutit dans une zone de dilution (17) ou «zone secondaire» située en aval de la partie amont (16) ou «zone primaire» de la chambre de combustion auxiliaire (7) et est munie de premiers moyens d'étranglement (18) à section de passage variable et dont la deuxième branche (6b) part d'un endroit de la première branche (6a) situé en amont des premiers moyens d'étranglement (18) et débouche dans la zone primaire (16) par l'intermédiaire de seconds moyens d'étranglement (19) de la section, les premiers moyens d'étranglement (18) étant agencés de manière à établir une baisse de pression qui est pratiquement indépendante du rapport entre le débit d'air dans le passage de dérivation et le débit total d'air délivré par le ou les compresseurs mais qui varie dans le même sens que la pression régnant en amont des premiers moyens d'étranglement (18), caractérisé en ce que, chaque fois qu'on lance un groupe turbocompresseur (10a, 10b), on oblige les premiers moyens d'étranglement (18) à occuper momentanément leur position de pleine ouverture.

**Patentansprüche**

1. Aufgeladene Brennkraftmaschine, z.B. aufgeladener Dieselmotor, welcher einerseits zumindest über zwei Kompressoren (2a, 2b), deren Ausgänge (3a, 3b) parallel über eine gemeinsame Verbindungsleitung (4) mit der Luftzufuhr (5) der Brennkraftmaschine verbunden werden können, sowie über Turbinen (8a, 8b) verfügt, von denen eine jede mechanisch einen der Kompressoren antreibt, so dass ein Turboladeraggregat gebildet wird, deren Eingänge (11a, 11b) parallel über eine gemeinsame Überleitung (12) mit dem Auspuff (13) des Motors verbunden werden können, und andererseits von einem Funktionsparameter entsprechend dem Verhältnis zwischen der die Brennkraftmaschine durchströmenden Luft und der durch die Kompressoren erzeugten Gesamtluftmenge abhängigen Aggregate vorgesehen sind, die derart ausgelegt sind, dass sie eine Verbindung herstellen oder unterbrechen können zwischen einerseits dem Ausgang (3a) des Kompressors (2a) eines der Turbolader und der Verbindungsleitung (4) und andererseits dem Eingang (11a) der Turbine (8a) des gleichen Turboladers und der Überleitung (12) entsprechend dem Wert des bezeichneten Parameters, dadurch gekennzeichnet, dass die Aggregate, die von einem Funktionsparameter der Brennkraftmaschine abhängig sind, so ausgelegt sind, dass sie gleichzeitig die Verbindung mit dem Ausgang (3a) des Kompressors (2a) eines Turboladers und dem Eingang (11a) der Turbine (8a) der gleichen Gruppe unterbrechen können, wie sie auch direkt durch eine Kurzschlussleitung (32) den Ausgang (3a) des Kompressors mit dem Eingang (11a) der Turbine des Turboladers verbinden können, und umgekehrt während sie die bezeichnete Verbindung herstellen, die Kurzschlussleitung (32) zwischen dem Ausgang (3a) des Kompressors und dem Eingang (11a) der bezeichneten Turbine unterbrechen können.

2. Brennkraftmaschine gemäss Anspruch 1, dadurch gekennzeichnet, dass eine Umblaseleitung (6), ausgerüstet mit einer Hilfsbrennkammer (7), die gemeinsame Verbindungsleitung (4) mit der gemeinsamen Überleitung (12) verbindet, indem sie den Motor umgibt.

3. Brennkraftmaschine gemäss einem der Ansprüche 1 und 2, dadurch gekennzeichnet, dass sie lediglich über zwei Turbolader (10a, 10b) verfügt.

4. Brennkraftmaschine gemäss Anspruch 3, dadurch gekennzeichnet, dass die beiden Turbolader identisch sind.

5. Brennkraftmaschine gemäss Anspruch 1 oder Anspruch 2 und einem der Ansprüche 3 und 4, dadurch gekennzeichnet, dass die Umblaseleitung (6) in zwei Hauptleitungen aufgeteilt ist, deren erstere (6a) in eine Verdünnungszone (17) oder «Sekundärzone» mündet, die sich stromabwärts zu dem oberen Teil oder der «Primärzone» der Hilfsbrennkammer (7) befindet, und mit der ersten Drosselvorrichtung (18) mit veränderlichem Durchlassquerschnitt ausgerüstet ist und deren zweite Leitung (6b) von einem Ort der ersten Leitung (6a) ausgeht, der sich stromaufwärts der ersten Drosselvorrichtung (18) befindet, die in die Primärzone (16) über die zweite Drosselvorrichtung (19) des Querschnitts mündet, wobei die erste Drosselvorrichtung (18) derart ausgelegt ist, dass sie einen Niederdruck erzeugt, welcher praktisch unabhängig von dem Verhältnis zwischen der Luftmenge in der Umblaseleitung (6) und der durch den oder die Kompressoren erzeugten Gesamtluftmenge ist, jedoch in gleicher Weise variiert wie der Druck, der stromaufwärts der ersten Drosselvorrichtung (18) herrscht, wobei Aggregate vorgesehen sind, die zur Veränderung der jeweiligen Kraftstoff- und Luftmenge, die in die Primärzone (16) geleitet wird, dienen.

6. Brennkraftmaschine gemäss einem der Ansprüche 1 bis 5, dadurch gekennzeichnet, dass die von einem Funktionsparameter der Brennkraftmaschine abhängigen Aggregate über Vier-Weg-Verteilervorrichtungen (35) zwischen dem Ausgang (3a) des Kompressors des Turboladers, dem Eingang (11a) der Turbine des gleichen Turboladers, der Verbindungsleitung (4) und der Überleitung (12) verfügen.

7. Brennkraftmaschine gemäss einem der Ansprüche 1 bis 6, wobei der Funktionsparameter der Brennkraftmaschine durch die Rotationsgeschwindigkeit desselben dargestellt wird, dadurch gekennzeichnet, dass die von der Geschwindigkeit der Brennkraftmaschine abhängigen Aggregate so ausgelegt sind, dass sie annähernd auf dem gleichen Geschwindigkeitsniveau der Brennkraftmaschine arbeiten und gleichzeitig, so schnell wie möglich, die genannte Verbindung herstellen und unterbrechen.

8. Brennkraftmaschine gemäss einem der Ansprüche 1 bis 7, dadurch gekennzeichnet, dass die von einem Funktionsparameter des Motors abhängigen Aggregate mit einem Anlasssystem (47a, 48) verbunden sind, vorzugsweise einem Druckluftsystem, welches demjenigen der Turbolader (10a) zugeordnet ist, das ausser Betrieb genommen werden kann, so dass dieses System vor Herstellen der Verbindung zwischen einerseits dem Ausgang (3a) des Kompressors des Turboladers und der Verbindungsleitung (4) und andererseits dem Eingang (11a) der Turbine des gleichen Turboladers und der Überleitung (12) in Betrieb genommen werden kann.

9. Brennkraftmaschine gemäss Anspruch 6, dadurch gekennzeichnet, dass der Verteiler (35) durch ein Gehäuse (39) und durch eine im Verhältnis zu dem Gehäuse bewegliche Vorrichtung (36) gebildet wird, dass das Gehäuse (39) an einer Seite eine erste Öffnung (40) aufweist, die mit der Verbindungsleitung (4) in Verbindung steht, und eine zweite Öffnung (41) aufweist, die mit der Überleitung (12) in Verbindung steht, und an der anderen Seite das Gehäuse mit einer dritten Öffnung (42) versehen ist, die mit dem Ausgang (3a) des Kompressors in Verbindung steht, und mit einer vierten Öffnung (43), die mit dem Eingang (11a) der Turbine des Turboladers (10a), der zu überbrücken ist, in Verbindung steht, dass die bewegliche Vorrichtung (36) durch eine erste Öffnung (44) durchzogen ist, die dazu dient, die erste Öffnung (40) mit der dritten Öffnung (42) des Gehäuses (39) in Verbindung zu bringen, dass eine zweite Öffnung (45) vorgesehen ist, welche die zweite Öffnung (41) mit der vierten Öffnung (43) des Gehäuses in Verbindung bringt, dass ferner eine Vertiefung (46) vorgesehen ist, die dazu dient, die Überbrückung (einen Kurzschluss) zwischen der dritten (42) und vierten (43) Öffnung herzustellen, und dass schliesslich die zweite Öffnung (45) an der Innenseite der Vertiefung durch eine Stulpe (66) verlängert ist, die sich mit ihrer freien Aussenseite gegen eine entsprechende Seite des Gehäuses (39) abstützen kann.

10. Verfahren zur Inbetriebnahme und zur Steuerung der Geschwindigkeit einer aufgeladenen Brennkraftmaschine, insbesondere eines aufgeladenen Dieselmotors, welche zumindest über zwei Kompressoren (2a, 2b), deren Ausgänge (3a, 3b) über eine gemeinsame Verbindungsleitung (4) mit dem Einlass der Brennkraftmaschine (5) und einer mit einer Hilfsbrennkammer (7) ausgerüsteten Umblaseleitung (6) verbunden werden können, sowie über Turbinen (8a, 8b) verfügt, wobei eine jede mechanisch einen der Kompressoren (2a, 2b) steuert, so dass ein Turboladeraggregat (10a, 10b) gebildet ist, deren Eingänge (11a, 11b) über eine gemeinsame Überleitung (12) parallel mit dem Auspuff (13) des Motors und dem Ausgang (14) der Hilfsbrennkammer (7) verbunden werden können, dadurch gekennzeichnet, dass beim Anlassen der erste Turbolader (10b), nach Überbrückung bzw. Kurzschliessung der anderen Turbolader (10a), gestartet wird, indem der Ausgang (3a) des Kompressors oder der Kompressoren (2a) des oder der anderen Turbolader mit dem Eingang (11a) der entsprechenden Turbine (8a) verbunden wird, während gleichzeitig Kraftstoff in die Hilfsbrennkammer (7) in ausreichender Menge zur Gewährleistung eines unabhängigen Betriebs des ersten Turboladers (10b) geleitet und dort gezündet wird, wobei der Verdichtungsdruck des Kompressors (2b) ausreicht, um den Motor anzulassen, insofern das Mengenverhältnis des letzteren berücksichtigt ist, dass der Motor angelassen und beschleunigt wird, bis das Verhältnis zwischen der Luftmenge, welche den Motor durchströmt und der gesamten durch den Kompressor (2b) erzeugten Luftmenge einen vorher festgelegten Schwellenwert erreicht, dass dann, wenn der Schwellenwert erreicht ist und für einen kurzen Augenblick überschritten wurde, ein zweiter Turbolader (10a) angelassen wird und, wenn seine Umdrehungsgeschwindigkeit oder sein Luftdruck einen ersten bestimmten Wert erreicht, die normalen Verbindungen des zweiten Turboladers (10a) wiederhergestellt werden und die Brennkraftmaschine aufgeladen wird, dass anschliessend daran der Reihe nach die anderen Turbolader angelassen werden, soweit vorhanden, wobei die normalen Verbindungen der Reihe nach bei vorher festgelegten Betriebswerten wiederhergestellt werden, dass dann, wenn der vorher überschrittene Betriebswert in umgekehrter Richtung überschritten wird, so schnell wie möglich der letzte (10a) in Betrieb genommene Turbolader überbrückt wird, so dass die Brennkraftmaschine in aufgeladenem Zustand durch den oder die anderen Turbolader (10b) betrieben wird, wobei in gleicher Weise zur Ausserbetriebnahme oder Inbetriebnahme eines der anderen Turbolader fortgefahren wird.

11. Verfahren gemäss Anspruch 10 für die Inbetriebnahme und die Steuerung der Geschwindigkeit einer Brennkraftmaschine, wobei die Umblaseleitung (6) in zwei Hauptleitungen (6a, 6b) aufgeteilt ist, deren erster Teil (6a) in eine Verdünnungszone (17) oder «Sekundärzone» mündet, die sich stromabwärts zu dem oberen Teil (16) oder der «Primärzone» der Hilfsbrennkammer (7) befindet und mit einer ersten Drosselvorrichtung (18) mit veränderlichem Durchlassquerschnitt ausgerüstet ist, dessen zweite Hauptleitung (6b) von einem Punkt der ersten Hauptleitung (6a) ausgeht, der sich stromaufwärts der ersten Drosselvorrichtung (18) befindet und in die Primärzone (16) über die zweite Drosselvorrichtung (19) für den Durchlassquerschnitt mündet, wobei die erste Drosselvorrichtung (18) derart ausgelegt ist, dass sie einen Niederdruck erzeugen kann, der praktisch unabhängig von dem Verhältnis zwischen der Luftmenge in der Umblaseleitung und der gesamten durch den oder die Kompressoren erzeugten Luftmenge ist, jedoch in gleicher Weise variiert, wie der Druck, der stromaufwärts der ersten Drosselvorrichtung (18) herrscht, dadurch gekennzeichnet, dass bei Anlassen eines Turboladers (10a, 10b) die erste Drosselvorrichtung (18) automatisch momentan völlig geöffnet wird.

**Claims**

1. A supercharged internal combustion engine, more particularly a supercharged diesel engine, comprising, on the one hand, at least two compressors (2a, 2b), the outlets (3a, 3b) of which are adapted to be connected in parallel, by a common connecting passage (4), to the air intake (5) of the engine, as well as turbines (8a, 8b), each of which drives one of the compressors mechanically forming therewith a turbocompressor unit and the inlets (11a, 11b) of which are adapted to be connected in parallel, by a common transfer passage (12), to the exhaust (13) of the engine and, on the other hand, means which are sensitive to an operational parameter of the engine representative of the ratio between the air flow passing through the engine and the total air flow delivered by the compressors, and which are adapted to interrupt or ensure communication between, on the one hand, the outlet (3a) of the compressor (2a) of one of the turbocompressor units and the connecting passage (4) and, on the other hand, the inlet (11a) of the turbine (8a) of the same unit and the transfer passage (12) according to the value of the said parameter, characterised in that the said means sensitive to an operational parameter of the engine are adapted in such a manner that, at the same time as they interrupt the said communication with the outlet (3a) of the compressor (2a) of one unit and with the inlet (11a) of the turbine (8a) of the same unit, they also connect directly, by a short-circuit (32), the outlet (3a) of this compressor to the inlet (11a) of the turbine of the unit and conversely, at the same time as they ensure said communication, they interrupt the short-circuit (32) between the outlet (3a) of this compressor and the inlet (11a) of the said turbine.

2. An internal combustion engine according to Claim 1, characterised in that a branch passage (6), equipped with an auxiliary combustion chamber (7), connects the common connecting passage (4) to the common transfer passage (12), circumventing the engine.

3. An internal combustion engine according to one of the Claims 1 and 2, characterised in that it comprises only two turbocompressor units (10a, 10b).

4. An internal combustion engine according to Claim 3, characterised in that the two turbocompressor units are identical.

5. An internal combustion engine according to Claim 2, alone or in combination with one of the Claims 3 and 4, characterised in that the branch passage (6) is divided into two main branches, the first (6a) of which ends in a dilution zone (17) or «secondary zone» situated downstream of the upstream portion (16) or «primary zone» of the auxiliary combustion chamber (7) and is equipped with first throttling means (12) having a variable section of passage and the second branch (6b) of which starts from a region of the first branch (6a) situated upstream of the first throttling means (18) and leads into the primary zone (16) by means of second means of throttling (19) the section, the first throttling means (18) being adapted in such a manner as to establish a reduction in pressure which is practically independent of the ratio between the air flow in the branch passage (6) and the total air flow delivered by the compressor or compressors but which varies in the same sense as the pressure prevailing upstream of the first throttling means (18) and means being provided to cause the flow of the fuel and the air flow introduced into the primary zone (16) to vary correlatively.

6. An internal combustion engine according to any one of the Claims 1 to 5, characterised in that the means sensitive to an operational parameter of the engine comprise four-way distributor means (35) between the outlet (3a) of the compressor of the unit referred to above, the inlet (11a) of the turbine of the same unit, the connecting passage (4) and the transfer passage (12).

7. An internal combustion engine according to any one of the Claims 1 to 6, wherein the operational parameter of the engine is the speed of rotation thereof, characterised in that the means sensitive to the speed of the engine are adapted to act approximately at the same speed threshold of the engine and as quickly as possible, both when they interrupt and when they ensure said communication.

8. An internal combustion engine according to any one of the Claims 1 to 7, characterised in that the means sensitive to an operational parameter of the engine are combined with a starting system (47a, 48), preferably of the compressed air jet type, associated with that one of the turbocompressor units (10a) which is adapted to be put out of action in such a manner as to bring this starting system into action before ensuring the communication between, on the one hand, the outlet (3a) of the compressor of this unit and the connecting passage (4) and, on the other hand, the inlet (11a) of the turbine of the same unit and the transfer passage (12).

9. An internal combustion engine according to Claim 6, characterised in that the distributor (35) consists of a casing (39) and a member (36) which is movable in relation to this casing; in that the casing (39) has, on the one side, a first aperture (40) communicating with the connecting passage (4) and a second aperture (41) communicating with the transfer passage (12) and, on the other side a third aperture (42) communicating with the outlet (3a) of the compressor and a fourth aperture (43) communicating with the inlet (11a) of the turbine of the unit (10a) to be short-circuited; in that the movable member (36) is traversed by a first hole (44) adapted to bring the first aperture (40) into communication with the third aperture (42) of the casing (39) and a second hole (45) capable of bringing the second aperture (41) into communication with the fourth aperture (43) of the casing and comprises a recess (46) adapted to establish the short-circuit between the third (42) and fourth (43) apertures; and in that the second hole (45) is extended inside the recess by a sleeve (66) capable of bearing, by its free end, against the corresponding face of the casing (39).

10. A method of starting and regulating the speed of a supercharged internal combustion engine, more particularly a supercharged diesel engine, comprising at least two compressors (2a, 2b), the outlets (3a, 3b) of which are adapted to be connected in parallel, by a common connecting passage (4), to the intake of the engine (5) and to a branch passage (6) equipped with an auxiliary combustion chamber (7), as well as turbines (8a, 8b), each of which drives one of the compressors (2a, 2b) mechanically, forming therewith a turbocompressor unit (10a, 10b), and the inlets (11a, 11b) of which are adapted to be connected in parallel, by a common transfer passage (12), to the exhaust (13) of the engine and to the outlet (14) of the auxiliary combustion chamber (7), characterised in that, on starting, the first (10b) of the turbocompressor units is started after the other unit or units (10a) have been short-circuited by connecting the outlet (3a) of the or of each compressor (2a) of this or these other units to the inlet (11a) of its turbine (8a) at the same time that fuel is transmitted into and ignited in the auxiliary combustion chamber (7) in a sufficient quantity to ensure the autonomy of the first unit (10b) at a delivery pressure of its compressor (2b) sufficient to permit the starting of the engine, taking into account the volumetric ratio of the latter;

– then the engine is started and accelerated until the ratio between the air flow passing through the engine and the total air flow delivered by the compressor (2b) reach a ratio threshold of given value;

– then, from the moment when said value of the ratio threshold is reached and exceeded for a minimum period of time, in that a second turbocompressor unit (10a) is started and, as soon as its speed of rotation or its delivery pressure reaches a first given operational threshold, the normal communications of this second turbocompressor (10a) are re-established and the engine is charged;

– then the other units are started successively, if they exist, with re-establishment of the normal communications at successive operational thresholds;

– then, when the operational threshold previously exceeded is passed in the opposite direction, the last (10a) of the turbocompressor units started is short-circuited as quickly as possible and the engine is left to operate while being supercharged by the other unit (10b) or units, and so on for the putting out of action or bringing into action of one of the units.

11. A method according to Claim 10 for the starting and regulating of the speed of an engine in which the branch passage (1) is divided into two main branches (6a, 6b), the first (6a) of which ends in a dilution zone (17) or «secondary zone» situated downstream of the upstream portion (16) or «primary zone» of the auxiliary combustion chamber (7) and is equipped with first throttling means (12) with a variable section of passage and the second branch (6b) of which starts from a region of the first branch (6a) situated upstream of the first throttling means (18) and leads into the primary zone (16) by means of second means (19) for throttling the section, the first throttling means (18) being adapted in such a manner as to establish a reduction in pressure which is practically independent of the ratio between the air flow in the branch passage and the total air flow delivered by the compressor or compressors but which varies in the same sense as the pressure prevailing upstream of the first throttling means (18), characterised in that, each time a turbocompressor unit (10a, 10b) is started, the first throttling means (18) are obliged to occupy temporarily their fully open position.

# Fig.1

## Fig. 2

Fig.3

Fig.4

Fig.6

Fig:5

0 042 335